# EUROPEAN PATENT APPLICATION

(11) **EP 4 507 407 A1**
(43) Date of publication of application: **12.02.2025**
(21) Application number: 24190839.1
(22) Date of filing: 25.07.2024
(51) Int. Cl.: H04W 60/04

(54) **MULTIPLE PAYLOADS IN NON-ACCESS STRATUM COMMUNICATIONS**

(30) Priority: 11.08.2023 FI 20235907
(71) Applicant: Nokia Technologies Oy, 02610 Espoo (FI)
(72) Inventor: MAVUREDDI DHANASEKARAN, Ranganathan, 81737 Munich (DE)
(74) Representative: Nokia EPO representatives

(57) **Abstract**

According to an aspect, there is provided an apparatus configured to perform the following. The apparatus receive a downlink, DL, non-access stratum, NAS, transport message comprising a plurality of payload containers. The plurality of payload containers comprise a user equipment parameters update, UPU, transparent container and one or more non-UPU payload containers. The UPU transparent container comprises a re-registration, REG, flag having a true value indicating that re-registration of the apparatus is requested. The apparatus sends the plurality of payload containers to respective upper layers for processing. The apparatus triggers the re-registration following detection of completion of the one or more respective processes associated with the one or more non-UPU payload containers

## Description

### TECHNICAL FIELD

Various example embodiments relate to wireless communications.

### BACKGROUND

A non-access stratum (NAS) is a functional layer in a wireless telecommunication protocol stack between the core network (CN) and user equipment (UE). NAS is used to manage the establishment of communication sessions and for maintaining continuous communications with the user equipment as it moves. NAS transport procedures are used, for example, for enabling a transport of payload between the UE and the access and mobility management function (AMF). The type of the payload is identified by the Payload container type information element (IE) in the NAS transport message. One of the possible payload types is "multiple payloads" which enables transport of more than one payload using NAS transport procedures. However, implementation of transport of multiple payloads in downlink direction is not straightforward as some combinations of transported payload container IEs may be essentially incompatible with each other leading to unwanted halting of some requested actions (e.g., requested positioning actions).

### SUMMARY

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

Figure 1 illustrates a system to which some embodiments may be applied;
Figure 2 illustrates signalling scenario between a UE and core network entities for illustrating a problem with the state of the art;
Figure 3 illustrates a process according to embodiments;
Figure 4 illustrates signalling between a UE and core network entities according to embodiments;
Figure 5 illustrates a process according to embodiments; and
Figure 6 illustrates an apparatus according to some embodiments.

### DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. Single features of different embodiments and/or examples may also be combined to provide other embodiments and/or examples.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, the terms "upper layer", "upper layers", "higher layer" or "higher layers" may refer to functional layers higher than the NAS layer.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile adhoc networks (MANETs) and Internet Protocol multimedia subsystems (IMS) or any combination thereof.

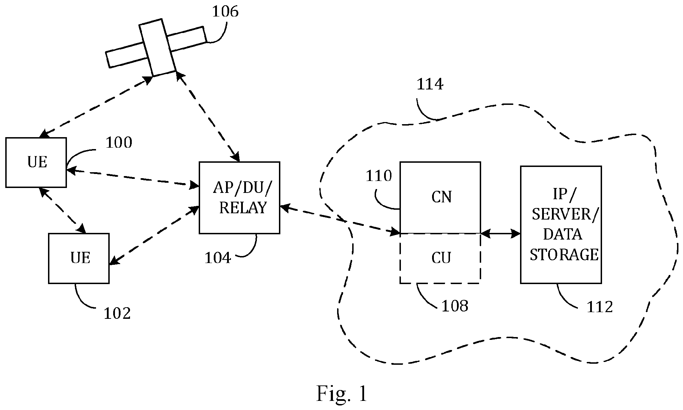

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The core network 110 may comprise an access and mobility management function (AMF). The AMF is a control plane function which performs access and mobility management for the terminal devices 100, 102. Further functions implemented at the AMF may comprise, for example, device registration, policy enforcement, session management, user plane function selection, subscriber data management, security management, network slicing, network integration, control plane management, fault management, policy control, location management and/or network optimization. The AMF may be connected to one or more clients for implementing said functions.

The core network 110 may comprise an authentication server function (AUSF) and a unified data management (UDM) network function. The AUSF and the UDM network function together manage user data. For example, the AUSF may be configured to implement an authentication function of identifying terminal devices and for providing and storing authentication keys. The UDM network function may be configured to manage data for access authorization, user registration, and/or data network profiles.

In some embodiments, the core network 110 may comprise a location management function (LMF) and comprise or be connected to a location services (LCS) client. The LMF is a network entity for providing positioning functionality. The LMF may, for example, be configured to receive measurements and assistance information from the radio access network (RAN) and one or more terminal devices via the AMF for determining the positions of the one or more terminal devices (i.e., UEs). The LCS client may be configured to request the LMF for positioning of terminal devices.

In some embodiments, the core network 110 may comprise an uncrewed aerial system network function (UAS-NF). The UAS NF may be configured to provide UAS-specific network exposure function (NEF) services to NF service consumers (e.g. AMF). Such services may comprise, e.g., unmanned aerial vehicle (UAV) authentication/authorization, UAV flight authorization, UAV-UAVC (UAV Controller) pairing authorization, UAV tracking and/or control of quality of service (QoS)/traffic filtering for C2 communication.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station. The user equipment may comprise a mobile equipment and at least one universal integrated circuit card (UICC).

The user device typically refers to a portable computing device that includes wireless mobile communication devices operating with or without a subscriber identification module (SIM) or UICC, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements con-trolling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 1, user devices are depicted to include 2 antennas only for the sake of clarity. The number of reception and/or transmission antennas may naturally vary according to a current implementation.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into the RAN by utilizing network function virtualization (NVF) and software defined networking (SDN). Using edge cloud may mean access node operations to be carried out, at least partly, in a server, host or node operationally coupled to a remote radio head or unit (RU) or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a central or centralized unit, CU 108). Thus, in summary, the RAN may comprise at least one distributed access node comprising a central unit, one or more distributed units communicatively connected to the central unit and one or more (remote) radio heads or units, each of which is communicatively connected to at least one of the one or more distributed units.

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

6G architecture is targeted to enable easy integration of everything, such as a network of networks, joint communication and sensing, non-terrestrial networks and terrestrial communication. 6G systems are envisioned to encompass machine learning algorithms as well as local and distributed computing capabilities, where virtualized network functions can be distributed over core and edge computing resources. Far edge computing, where computing resources are pushed to the very edge of the network, will be part of the distributed computing environment, for example in "zero-delay" scenarios. 5G systems may also employ such capabilities. More generally, the actual (radio) communication system is envisaged to be comprised of one or more computer programs executed within a programmable infrastructure, such as general-purpose computing entities (servers, processors, and like).

Embodiments to be discussed below relate specifically to non-access stratum (NAS) communication. A non-access stratum (NAS) is a functional layer in a wireless telecommunication protocol stack between the core network and UE for managing the establishment of communication sessions and for maintaining continuous communications with the UE as it moves. The purpose of NAS transport procedures is to enable transport of one or multiple payloads between the UE and a core network node such as the AMF. The type of the payload is identified by the payload container type information element (IE). The type of the payload may be one of the following:
a) an N1 session management (SM) information,
b) a short message (or messaging) service (SMS) message,
c) an LTE positioning protocol (LPP) message,
d) a steering of roaming (SOR) transparent container comprising steering of roaming information;
e) a UE policy container comprising UE policy information,
f) a UE parameters update (UPU) transparent container comprising one or more UE parameters,
g) a location services (LCS) message container,
h) cellular Internet of Things (CIoT) user data container,
i) service-level-AA (authentication & authorization) container,
j) an event notification or
k) multiple payloads.
For these payload types, along with the payload, the NAS transport procedure may transport the associated information (e.g., protocol data unit, PDU, session information for 5GS session management (5GSM) message payload). For payload type k), the payload container IE may comprise or consist of a list of payload container entries, where each of payload container entry contains the payload and optional associated information (e.g. PDU session information for 5GSM message payload).

The payload container type IE may correspond, for example, to four bits. For example, the payload container type IEs a) to k) may correspond to values 0001, 0010, 0011, 0100, 0101, 0110, 0111, 1000, 1001, 1010 and 1111, respectively.

Upon reception of a downlink (DL) NAS transport message of any type, the UE may stop the back-off timer (e.g., the timer T3346) if running. Moreover, upon reception of a DL NAS transport message, various different processes or actions may be performed by the UE depending on value of the payload type IE.

Upon reception of a DL NAS transport message where the payload container type IE is set to N1 SM information (option a)) and the 5GMM cause IE is not included in the DL NAS transport message, the 5GSM message in the payload container IE and the PDU session ID are handled in the 5GSM procedures specified in clause 6 of TS 24.501.

Upon reception of a DL NAS transport message where the payload container type IE is set to SMS (option b)), the UE forwards the content of the payload container IE to the SMS stack entity.

Upon reception of a DL NAS transport message where the payload container type IE is set to LPP message container (option c)), the UE forwards the payload container type, the content of the payload container IE and the routing information included in the additional information IE to the upper layer LCS application.

Upon reception of a DL NAS transport message where the payload container type IE is set to SOR transparent container (option d)), the UE may be configured to handle the DL NAS transport message as discussed in Section 5.4.5.3.3 d) of TS 24.501.

Upon reception of a DL NAS transport message where the payload container type IE is set to a UE policy container (option e)), the UE may be configured to handle the DL NAS transport message as discussed in Annex D of TS 24.501.

Upon reception of a DL NAS transport message where the payload container type IE is set to UPU transparent container (option f)), the UE (or ME thereof) performs the following. The ME behaves as if an SMS is received with protocol identifier set to SIM data download, data coding scheme set to class 2 message and SMS payload included as secured packet contents of UPU transparent container IE. The SMS payload is forwarded from the ME to the UICC as specified in 3GPP TS 23.040. Moreover, if the acknowledgement (ACK) bit of the UPU header in the UPU transparent container is set to "acknowledgment requested" and if the ME receives status bytes from the UICC indicating that the UICC has received the secured packet successfully, the ME sends an acknowledgement in the payload container IE of an UL NAS TRANSPORT message with payload type IE set to "UE parameters update transparent container" as specified in subclause 5.4.5.2.2 of TS 24.501. Furthermore, if the ME receives a refresh (or REFRESH) command (or message) from the UICC as specified in 3GPP TS 31.111 and if the re-registration (REG) bit of the UPU header in the UPU transparent container IE is set to "re-registration requested", the ME triggers the re-registration (i.e., de-registration and subsequent registration) towards the network.

Upon reception of a DL NAS transport message where the payload container type IE is set to LCS message container (option g)), the UE forwards the payload container type, the content of the payload container IE and the routing information in the additional information IE, if included, to the upper layer location services application.

Upon reception of a DL NAS transport message where the payload container type IE is set to CIoT user data container (option h), the UE forwards the content of the payload container IE and the PDU session ID to the 5GSM sublayer;

Upon reception of a DL NAS transport message where the payload container type IE is set to service-level-AA container (option i), the UE forwards the content of the payload container IE to the upper layers.

Upon reception of a DL NAS transport message where the payload container type IE is set to event notification (option j), the UE forwards the received event notification indicator(s) to the upper layers.

Upon reception of a DL NAS transport message where the payload container type IE is set to multiple payloads (option k), the UE first decodes the content of the payload container IE to obtain the number of payload container entries. Then, for each payload container entry, the UE shall: 1) decode the payload container type field; 2) decode the optional IE fields and the payload container contents field in the payload container entry; and 3) handle the content of each payload container entry in the same way as the content of the payload container IE and the associated optional IEs as specified above according to the payload container type field.

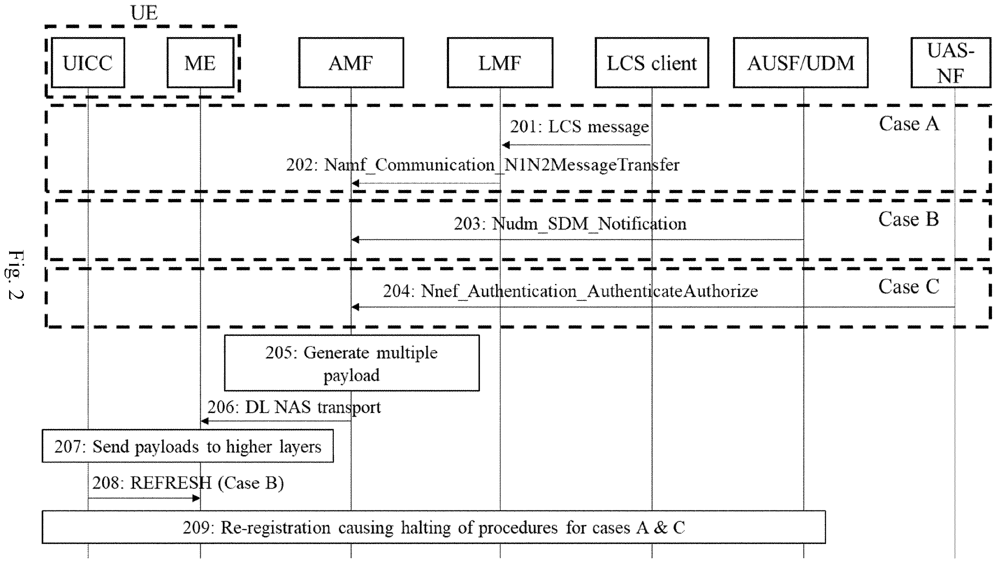

A particular problem associated with option k) ("multiple payloads") with certain combination of payloads is discussed in the following in connection with the signaling diagram of Figure 2 illustrating a scenario where multiple payloads of different types are to be transported from the AMF to the UE. Specifically, Figure 2 illustrates signaling between a user equipment comprising an UICC and an ME, an AMF, an LMF, an LCS client, an AUSF/UDM and an UAS-NF. Said elements may be defined here as described in connection with Figure 1.

In Figure 2, three different messages are communicated to the AMF for triggering further transmission to the UE. These are indicated in Figure 2 as Cases A, B and C.

In Case A, the LCS client transmits, in message 201, a LCS message to the LMF. The LCS message 201 may be, for example, a downlink positioning message (with assistance data) or a location information request. The LCS message 201 may be transmitted via a gateway mobile location center (GLMC). Upon receiving the LCS message 201, the LMF transmits (or forwards), in message 202, the LCS message towards the AMF using the Service Based Interface (SBI), for example. The LCS message 202 may be an Namf_Communication_N1N2MessageTransfer message (as shown in Figure 2). The AMF receives the LCS message 202.

In Case B, in response to receiving UPU data for routing indicator update, the AUSF/UDM (or specifically the UDM) transmits, in message 203, a UPU data message or container (i.e., a message comprising the UPU data) to the AMF. The UPU data message or container 203 may be a home network (HN) UPU data message or container. The UPU data message or container 203 may be an Nudm_SDM_Notification message (as shown in Figure 2). The AMF receives the LCS message 203.

In Case C, the UAS-NF transmits, in message 204, an authentication & authorization message via the NEF to the AMF for UAV authentication and authorization. The authentication & authorization message 204 may comprise, for example, a generic public subscription identifier (GPSI), a service level device identity (e.g., capacity allocation acknowledgement, CAA, -level UAV identifier) and/or an authentication message. The authentication message may be based on an authentication method used that is forwarded transparently to the UE over NAS mobility management (MM) transport messages. The authentication message may comprise, e.g., UAV UAS service supplier (USS) authentication and authorization (UUAA) aviation payload required by the USS if it was not provided by the UE before. The authentication & authorization message 204 may be Nnef_Authentication_AuthenticateAuthorize message (as shown in Figure 2).

When all three above Cases A to C are considered simultaneously, the AMF generates, in block 205, a downlink (DL) NAS transport message with multiple payloads with three containers (corresponding to Cases A to C). Thus, the plurality of payload containers of the DL NAS transport message comprise an UPU transparent container, an LPP message container and a service-level-AA (authentication and authorization) message container. The UPU transparent container comprises a re-registration (REG) flag having a true value (` 1') indicating that re-registration of the UE (i.e., de-registration followed by registration) is requested (by the UDM).

The AMF transmits, in message 206, said DL NAS transport message to the UE (or to the ME thereof). Upon reception of the DL NAS transport message, the UE will handle the different payloads in different protocol stack layers. Namely, the UE sends, in block 207, the payloads to respective (different) higher layers (of the UE) for further processing.

Each payload will have different action to be considered with the received container. For example, Case B may result in an acknowledgement (ACK) being transmitted following content storage and subsequently a de-registration procedure. Moreover, Case A may result in UE positioning measurement(s) and, following the completion of the measurements in transmission of a location information response from the AMF to the LCS client via the LMF. Case C may result in performing of end-to-end authentication for UAV with USS/UTM (Uncrewed Aerial System traffic management).

As mentioned above, the UPU transparent container included in the DL NAS transport message 206 (and forwarded in block 207) comprises a REG flag (equally called a REG bit assuming the flag consists of a single bit) having a true value ('1') indicating that re-registration of the apparatus is requested (by the UDM). This leads to the UICC of the UE transmitting, in message 208, a REFRESH message to the ME of the UE for triggering re-registration. Upon receiving the REFRESH message, the ME triggers and carries out the re-registration in block 209. Due to this re-registration in block 209, the actions relating to the payloads of Cases A and C (as described in the previous paragraph) cannot be carried out. Thus, having the REG flag set to true in the multiple payloads case always results in further actions relating to the other containers to be halted. For example, even if location information is requested and LPP UE positioning measurements are ongoing, de-registration and registration could be triggered before the LPP UE positioning measurement can be completed. This may be the case always when the REG flag is set to true and sent to the UE. This is a considerable limitation in the implementation of DL NAS transport involving multiple payloads. The embodiments to be discussed below seek to overcome this issue.

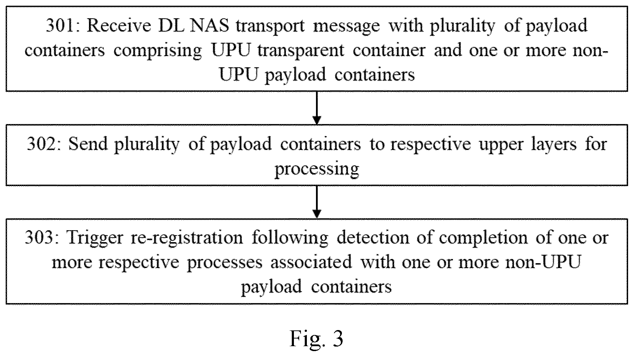

Figure 3 illustrates a process according to embodiments for handling of DL NAS transport with multiple payloads. The illustrated processes of Figure 3 may be performed by a user equipment (UE) or by a mobile equipment (ME) forming a part of the UE or by a part of the ME (e.g., a chipset configured to control the functioning of the ME or the UE). Here, the UE may be one of the UEs 100, 102 of Figure 1. The UE may comprise the ME and an UICC (communicatively) connected to the ME. The illustrated processes of Figure 3 may be carried out by the NAS layer. In the following, the entity performing the process of Figure 3 is called an apparatus for simplicity.

Referring to Figure 3, the apparatus initially receives, in block 301, a DL NAS transport message comprising a plurality of payload containers (i.e., having the payload container type IE "multiple payloads"). The plurality of payload containers comprise a UPU transparent container and one or more non-UPU payload containers. Here, the UPU transparent container comprises a REG flag having a true value (` 1') indicating that re-registration of the apparatus (or the UE) is requested, for example, by the UDM. The DL NAS transport message of block 301 may correspond to message 206 of Figure 2.

The one or more non-UPU payload containers may be any non-UPU payload containers. In some embodiments, the one or more non-UPU payload containers comprise at least one of (N1) SM information, an SMS message, an SOR transparent container, a UE policy container, a CIoT user data container, an event notification, an LPP message container or a service-level-AA message container. In some embodiments, the one or more non-UPU payload containers comprise an LPP message container and/or a service-level-AA message container.

The apparatus sends, in block 302, the plurality of payload containers to respective upper layers for processing. The one or more non-UPU payload containers sent in block 302 may comprise a request for completion flag set to true indicating that completion of one or more respective processes associated with the one or more non-UPU payload containers is requested. Subsequently, one or more respective processes associated with the one or more non-UPU payload containers may be carried out to completion. Said one or more processes may comprise, for example, requesting, performing and reporting UE positioning measurements and/or authentication (and authorization) for a UAV.

In some embodiments, a request for completion flag having the true value may be included in all of the plurality of payload containers sent, in block 302, to respective upper layers for processing.

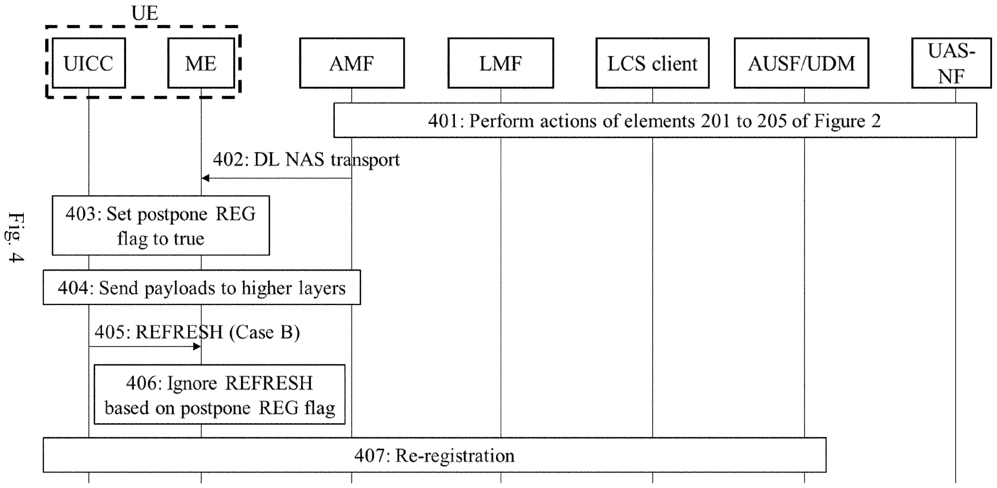

The apparatus triggers, in block 303 following block 302, the re-registration (i.e., de-registration followed by registration) following detection of completion of the one or more respective processes associated with the one or more non-UPU payload containers. The triggering of the re-registration in block 303 may comprise at least transmitting a de-registration request to the AMF. Subsequently, the apparatus may receive a de-registration accept message from the AMF. In general, the de-registration may be carried out as described in Section 5.5.2 of 3GPP TS 24.501. Thereafter, the apparatus may trigger a registration procedure (e.g., by transmitting a registration request to the AMF). In general, the registration may be carried out as described in Section 5.5.1 of 3GPP TS 24.501. Notably, in this case, the re-registration is not triggered by reception of any REFRESH message as discussed in connection with Figure 2 (that is, such REFRESH message may be simply ignored as discussed below in connection with elements 405 to 406 of Figure 4). It should be noted that while block 303 as depicted in Figure 3 is arranged over all of the UE, the AMF, the LMF, the LCS client, the AUSF/UDM and the UAS-NF for simplicity of presentation, the re-registration may involve only the UE, the AMF and the AUSF/UDM (not the LMF, the LCS client or the UAS-NF).

Figure 4 illustrates signalling between a UE comprising an UICC and an ME, an AMF, an LMF, an LCS client, an AUSF/UDM and an UAS-NF for handling of DL NAS transport with multiple payloads. Said elements may be defined here as described in connection with Figures 1 and/or 2. The illustrated processes of UICC/ME may be carried out by the NAS layer.

Referring to Figure 4, the initial steps of the procedure in block 401 may correspond fully to elements 201 to 205 of Figure 2. Alternatively, the initial steps of the procedure in block 401 may correspond fully to elements 201 to 203, 205 or elements 203 to 205 of Figure 2 (i.e., only one of Cases A & C may apply).

Also, similar to message 206 of Figure 2, the LMF transmits, in message 401, a DL NAS transport message comprising a plurality of payload containers (i.e., having the payload container type IE "multiple payloads"). The plurality of payload containers comprise a UPU transparent container and one or more non-UPU payload containers. Here, the UPU transparent container comprises a REG flag having a true value (` 1') indicating that re-registration of the UE is requested (by the UDM).

The ME receives the DL NAS transport message with multiple payloads. Thereafter, the UE (or specifically the ME) sets, in block 403, based on the DL NAS transport message comprising the plurality of payload containers (as opposed to a single payload container) and the REG flag having the true value, a postpone REG flag to true ('1'). The postpone REG flag serves to indicate whether or not the re-registration should be postponed (until the completion of actions relating to other, non-UPU payload containers).

The UE (or the ME) sends, in block 404, the plurality of payload containers to respective upper layers (or equally to respective modules such as LPP and/or UAS modules) for processing. Here, a request for completion flag in the one or more non-UPU payload containers (associated with Case A and/or Case C) may be set to true indicating that completion of one or more respective processes associated with the one or more non-UPU payload containers is requested.

The UICC sends, in message 405, as a part of the processing of Case B, a REFRESH message to the ME. In contrast to the procedure of Figure 2, the ME, however, does not trigger the re-registration in this case. Instead, the ME simply ignores, in block 406, the received REFRESH message based on the postpone REG flag being set to true. In other words, while the postpone REG flag is set to true, no re-registration is triggered by any REFRESH messages received at the ME.

The sending of the REFRESH message (block 405) be triggered in multiple different ways. For example, a REG flag having the true value (sent from the network to the UICC in elements 402, 404) may trigger the REFRESH message when received content is successfully verified and stored. In case the verification fails, no REFRESH command may be triggered. To give another example, if an AUTHENTICATE message sent from the ME to the UICC had been executed before the pairing procedure has been successfully completed, the UICC may need to trigger a network attachment procedure by sending a proactive REFRESH message. As a final example, assume the UICC is removed and inserted back to the ME and if the EF_{IMSI} (i.e., the elementary file, EF, comprising the international mobile subscriber identity, IMSI) and the IMSI is changed, the UICC may issue a REFRESH message to the ME.

The UE (or the ME) triggers, in block 407, the re-registration of the UE in response to detecting completion of the one or more respective processes associated with the one or more non-UPU payload containers while the postpone REG flag is set to true. Subsequently, the re-registration may be carried out, in block 407, as described in connection with block 303 of Figure 3.

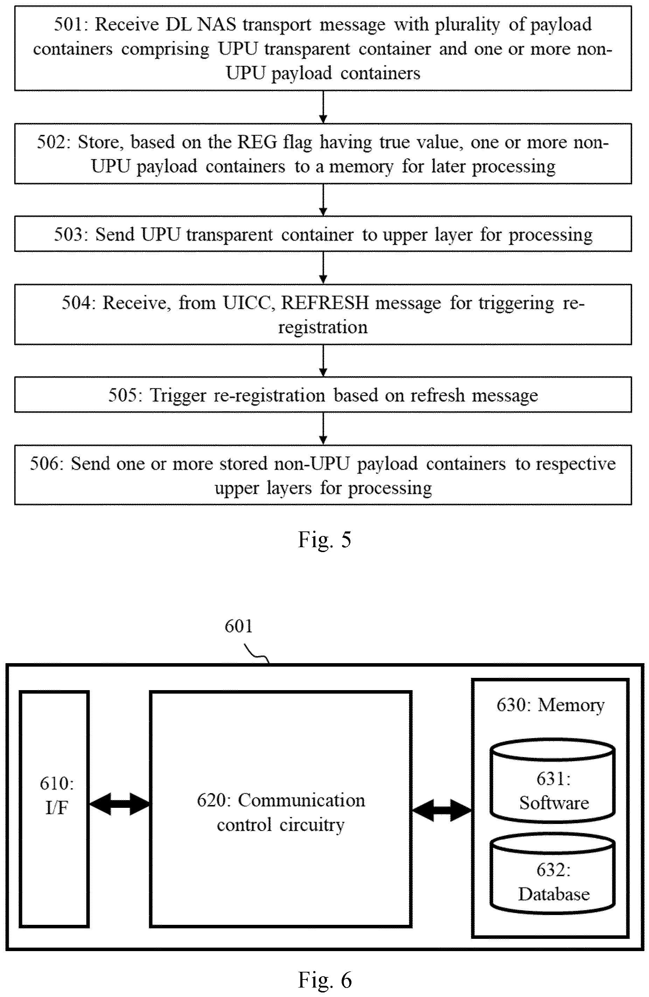

Figure 5 illustrates an alternative process according to embodiments for handling of DL NAS transport with multiple payloads. The illustrated processes of Figure 5 may be performed by a user equipment (UE) or by a mobile equipment (ME) forming a part of the UE or by a part of the ME. Here, the UE may be one of the UEs 100, 102 of Figure 1. The UE may comprise the ME and an UICC (communicatively) connected to the ME. The illustrated processes of Figure 5 may be carried out by the NAS layer. In the following, the entity performing the process of Figure 5 is called an apparatus for simplicity.

Referring to Figure 5, the apparatus receives, in block 501, a DL NAS transport message comprising a plurality of payload containers, similar to block 301 of Figure 3. Thus, the plurality of payload containers comprise a UPU transparent container and one or more non-UPU payload containers, where the UPU transparent container comprise a REG flag having a true value indicating that re-registration of the apparatus is requested (by the UDM). The DL NAS transport message may have been generated and transmitted as discussed above in connection with Figure 2.

The one or more non-UPU payload containers may be any non-UPU payload containers. In some embodiments, the one or more non-UPU payload containers comprise at least one of (N1) SM information, an SMS message, an SOR transparent container, a UE policy container, a CIoT user data container, an event notification, an LPP message container or a service-level-AA message container. In some embodiments, the one or more non-UPU payload containers comprise an LPP message container and/or a service-level-AA message container.

Based on the REG flag having the true value (indicating that registration is required after successful update of UPU data), the apparatus (temporarily) stores, in block 502, the one or more non-UPU payload containers to at least one memory for later processing. The at least one memory may comprise at least one internal memory of the apparatus and/or at least one external memory. In contrast to the solutions discussed above, the apparatus does not send the one or more non-UPU payload containers to respective upper layers for processing at this stage.

The apparatus sends, in block 503, the UPU transparent container to an upper layer (or to an UPU module) for processing. The one or more non-UPU containers are not sent to the upper layers for processing at this stage.

The apparatus receives, in block 504, from a UICC connected to the apparatus, a REFRESH message for triggering the re-registration (as a part of the processing of the UPU transparent container).

The apparatus triggers, in block 505, the re-registration based on the REFRESH message. During the re-registration procedure, the temporarily stored other non-UPU containers may not be deleted or cleared. The re-registration may be carried out as described in connection with block 303 of Figure 3.

Following a completion of the re-registration, the apparatus (retrieves and) sends, in block 506, the one or more stored non-UPU payload containers to respective upper layers (or equally to respective modules such as LPP and/or UAS modules) for processing. The one or more stored non-UPU payload containers sent in block 506 may comprise a request for completion flag set to true indicating that completion of the one or more respective processes associated with the one or more non-UPU payload containers is requested. Thereafter, the apparatus may remove the one or more non-UPU payload containers from the at least one memory.

Thus, while in the embodiments of Figure 3 to 4, the re-registration was delayed until the one or more actions (or processes) related to the one or more non-UPU payload containers could be completed, in the embodiment of Figure 5, the performing of the one or more actions related to the one or more non-UPU payload containers is delayed until the re-registration is completed.

The blocks, related functions, and information exchanges described above by means of Figures 3 to 5 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Figure 6 provides an apparatus 601 according to some embodiments. Specifically, Figure 6 may illustrate an UE, an ME or a part of either.

The apparatus 601 may comprise one or more communication control circuitry 620, such as at least one processor, and at least one memory 630, including one or more algorithms 631 (instructions), such as a computer program code (software) wherein the at least one memory and the computer program code (software) are configured, with the at least one processor, to cause the apparatus 601 to carry out any one of the exemplified functionalities of the apparatus (being, e.g., the ME or the UE) described above. Said at least one memory 630 may also comprise at least one database 632.

When the one or more communication control circuitry 620 comprises more than one processor, the apparatus 601 may be a distributed device wherein processing of tasks takes place in more than one physical unit. Each of the at least one processor may comprise one or more processor cores. A processing core may comprise, for example, a Cortex-A8 processing core manufactured by ARM Holdings or a Zen processing core designed by Advanced Micro Devices Corporation. The one or more communication control circuitry 620 may comprise at least one Qualcomm Snapdragon and/or Intel Atom processor. The one or more communication control circuitry 620 may comprise at least one application-specific integrated circuit (ASIC). The one or more control circuitry 620 may comprise at least one field-programmable gate array (FPGA).

Referring to Figure 6, the one or more communication control circuitry 620 of the apparatus 601 are configured to carry out functionalities described above by means of any of Figures 3 and 5 and/or elements 403, 404, 405, 406, 407 (partly) of Figure 4 using one or more individual circuitries. It is also feasible to use specific integrated circuits, such as ASIC (Application Specific Integrated Circuit) or other components and devices for implementing the functionalities in accordance with different embodiments.

Referring to Figure 6, the apparatus 601 may further comprise different interfaces 610 such as one or more communication interfaces comprising hardware and/or software for realizing communication connectivity according to one or more communication protocols. Specifically, the one or more communication interfaces 610 may comprise, for example, communication interfaces providing a connection between the apparatus 601 and one or more access nodes for providing connection to core network (comprising, e.g., the AMF, LMF, AUSF/UDM & UAS-NF). If the apparatus 601 is an ME, the one or more communication interfaces 610 may comprise also communication interfaces between the apparatus 601 and at least one UICC. The one or more communication interfaces 610 may comprise standard well-known components such as an amplifier, filter, frequency-converter, (de)modulator, and encoder/decoder circuitries, controlled by the corresponding controlling units, and one or more antennas. The apparatus 601 may also comprise one or more user interfaces.

Referring to Figure 6, the memory 630 may be implemented using any suitable data storage technology, such as semiconductor based memory devices, flash memory, magnetic memory devices and systems, optical memory devices and systems, fixed memory and removable memory.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with soft-ware/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hard-ware circuit or processor (or multiple processors) or a portion of a hardware circuit or processor and its (or their) accompanying software and/or firmware.

In an embodiment, at least some of the processes described in connection with Figures 3 to 5 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In an embodiment, the at least one processor, the memory, and the computer program code form processing means or comprises one or more computer program code portions for carrying out one or more operations according to any one of the embodiments of Figures 3 to 5 or operations thereof. In some embodiments, at least some of the processes may be implemented using discrete components.

According to an embodiment, there is provided an apparatus (e.g., an ME or a UE) comprising means for performing:
receiving a downlink, DL, non-access stratum, NAS, transport message comprising a plurality of payload containers, wherein the plurality of payload containers comprise a user equipment parameters update, UPU, transparent container and one or more non-UPU payload containers, the UPU transparent container comprising a re-registration, REG, flag having a true value indicating that re-registration of the apparatus is requested;
sending the plurality of payload containers to respective upper layers for processing; and
triggering the re-registration following detection of completion of the one or more respective processes associated with the one or more non-UPU payload containers.

According to an embodiment, there is provided an apparatus (e.g., an ME or a UE) comprising means for performing:
a receiving a downlink, DL, non-access stratum, NAS, transport message comprising a plurality of payload containers, wherein the plurality of payload containers comprise a user equipment parameters update, UPU, transparent container and one or more non-UPU payload containers, the UPU transparent container comprising a re-registration, REG, flag having a true value indicating that re-registration of the apparatus is requested;
storing, based on the REG flag having the true value, the one or more non-UPU payload containers to the at least one memory or to at least one external memory for later processing;
sending the UPU transparent container to an upper layer for processing;
receiving, from a universal integrated circuit card, UICC, connected to the apparatus, a REFRESH message for triggering the re-registration;
triggering the re-registration based on the REFRESH message; and
following a completion of the re-registration, sending the one or more stored non-UPU payload containers to respective upper layers for processing.

Embodiments as described may also be carried out, fully or at least in part, in the form of a computer process defined by a computer program or portions thereof. Embodiments of the methods described in connection with Figures 3 to 5 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present solution. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present solution may be referred to herein along with alternatives for the various components thereof. It is understood that such embodiments, examples, and alternatives are not to be construed as de facto equivalents of one another, but are to be considered as separate and autonomous representations of the present solution.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

### INDUSTRIAL APPLICABILITY

At least some embodiments find industrial application in wireless communications.

## Claims

1. An apparatus comprising:
at least one processor; and
at least one memory storing instructions that, when executed by the at least one processor, cause the apparatus at least to perform:
receiving a downlink, DL, non-access stratum, NAS, transport message comprising a plurality of payload containers, wherein the plurality of payload containers comprise a user equipment parameters update, UPU, transparent container and one or more non-UPU payload containers, the UPU transparent container comprising a re-registration, REG, flag having a true value indicating that re-registration of the apparatus is requested;
sending the plurality of payload containers to respective upper layers for processing; and
triggering the re-registration following detection of completion of one or more respective processes associated with the one or more non-UPU payload containers.

2. The apparatus of claim 1, wherein the one or more non-UPU payload containers sent to the respective upper layers for the processing comprise a request for completion flag set to true indicating that completion of the one or more respective processes associated with the one or more non-UPU payload containers is requested.

3. The apparatus of claim 1 or 2, wherein the at least one memory and the instructions are configured, with the at least one processor, to cause the apparatus to perform, before the detecting:
setting, based on the DL NAS transport message comprising the plurality of payload containers and the REG flag having the true value, a postpone REG flag to true.

4. The apparatus of claim 3, wherein the triggering of the re-registration is performed in response to the detecting of the completion of the one or more respective processes associated with the one or more non-UPU payload containers while the postpone REG flag is set to true.

5. The apparatus of claim 3 or 4, wherein the at least one memory and the instructions are configured, with the at least one processor, to cause the apparatus to perform, after the receiving and before the detecting:
receiving, from a universal integrated circuit card, UICC, communicatively connected to the apparatus, a REFRESH message for triggering the re-registration; and
ignoring the REFRESH message based on the postpone REG flag being set to true.

6. The apparatus according to any preceding claim, wherein the one or more non-UPU payload containers comprise at least one of session management, SM, information, a short message service, SMS, message, a steering of roaming, SOR, transparent container, a user equipment, UE, policy container, a cellular Internet of Things, CIoT, user data container, an event notification, a long term evolution, LTE, positioning protocol, LPP, message container or a service-level-AA, authentication and authorization, message container.

7. The apparatus according to any preceding claim, wherein the apparatus is a mobile equipment communicatively connected to an UICC.

8. An apparatus comprising:
at least one processor; and
at least one memory storing instructions that, when executed by the at least one processor, cause the apparatus at least to perform:
receiving a downlink, DL, non-access stratum, NAS, transport message comprising a plurality of payload containers, wherein the plurality of payload containers comprise a user equipment parameters update, UPU, transparent container and one or more non-UPU payload containers, the UPU transparent container comprising a re-registration, REG, flag having a true value indicating that re-registration of the apparatus is requested;
storing, based on the REG flag having the true value, the one or more non-UPU payload containers to the at least one memory or to at least one external memory for later processing;
sending the UPU transparent container to an upper layer for processing;
receiving, from a universal integrated circuit card, UICC, connected to the apparatus, a REFRESH message for triggering the re-registration;
triggering the re-registration based on the REFRESH message; and
following a completion of the re-registration, sending the one or more stored non-UPU payload containers to respective upper layers for processing.

9. The apparatus of claim 8, wherein the at least one memory and the instructions are configured, with the at least one processor, to cause the apparatus to perform, following the sending of the one or more stored non-UPU payload containers to the respective upper layers:
removing the one or more stored non-UPU payload containers from the at least one memory or the at least one external memory.

10. The apparatus of claim 8 or 9, wherein the one or more non-UPU payload containers comprise at least one of session management, SM, information, a short message service, SMS, message, a steering of roaming, SOR, transparent container, a user equipment, UE, policy container, a cellular Internet of Things, CIoT, user data container, an event notification, a long term evolution, LTE, positioning protocol, LPP, message container or a service-level-AA, authentication and authorization, message container.

11. The apparatus according to any of claims 8 to 10, wherein the apparatus is a mobile equipment communicatively connected to the UICC.

12. A user equipment comprising:
an apparatus according to any preceding claim; and
a universal integrated circuit card, UICC, communicatively connected to the apparatus and comprising at least one processor and at least one memory storing instructions that, when executed by the at least one processor, cause the UICC at least to perform:
sending, to the apparatus, a REFRESH message for triggering re-registration.

13. A method comprising:
receiving a downlink, DL, non-access stratum, NAS, transport message comprising a plurality of payload containers, wherein the plurality of payload containers comprise a user equipment parameters update, UPU, transparent container and one or more non-UPU payload containers, the UPU transparent container comprising a re-registration, REG, flag having a true value indicating that re-registration of a terminal device is requested;
sending the plurality of payload containers to respective upper layers for processing; and
triggering the re-registration following detection of completion of the one or more respective processes associated with the one or more non-UPU payload containers.

14. A method comprising:
receiving a downlink, DL, non-access stratum, NAS, transport message comprising a plurality of payload containers, wherein the plurality of payload containers comprise a user equipment parameters update, UPU, transparent container and one or more non-UPU payload containers, the UPU transparent container comprising a re-registration, REG, flag having a true value indicating that re-registration of a terminal device is requested;
storing, based on the REG flag having the true value, the one or more non-UPU payload containers to the at least one memory or to at least one external memory for later processing;
sending the UPU transparent container to an upper layer for processing;
receiving, from a universal integrated circuit card, UICC, connected to the apparatus, a REFRESH message for triggering the re-registration;
triggering the re-registration based on the REFRESH message; and
following a completion of the re-registration, sending the one or more stored non-UPU payload containers to respective upper layers for processing.

15. A non-transitory computer readable medium having stored thereon instructions that, when executed by a computing device, cause the computing device to perform:
receiving a downlink, DL, non-access stratum, NAS, transport message comprising a plurality of payload containers, wherein the plurality of payload containers comprise a user equipment parameters update, UPU, transparent container and one or more non-UPU payload containers, the UPU transparent container comprising a re-registration, REG, flag having a true value indicating that re-registration of the computing device is requested;
sending the plurality of payload containers to respective upper layers for processing; and
triggering the re-registration following detection of completion of the one or more respective processes associated with the one or more non-UPU payload containers
